# EUROPÄISCHE PATENTSCHRIFT

(11) **EP 2 890 753 B1**
(45) Veröffentlichungstag und Bekanntmachung des Hinweises auf die Patenterteilung: **18.07.2018**
(21) Anmeldenummer: 13756874.7
(22) Anmeldetag: 29.08.2013
(51) Int. Cl.: C09J 7/38, C09J 7/40, C09J 7/22

(54) **STRUKTURIERTE HAFTKLEBESCHICHT**
STRUCTURED ADHESIVE LAYER
COUCHE COLLANTE ADHÉRENTE STRUCTURÉE

(30) Priorität: 29.08.2012 DE 102012215345
(43) Veröffentlichungstag der Anmeldung: 08.07.2015
(73) Patentinhaber: tesa SE, 22848 Norderstedt (DE)
(72) Erfinder: THEBUD, Nils, 21335 Lüneburg (DE); EBENAU, Steffen, 22089 Hamburg (DE)
(86) Internationale Anmeldenummer: PCT/EP2013/067951
(87) Internationale Veröffentlichungsnummer: WO 2014/033236

(56) Entgegenhaltungen:
- EP-A1- 1 739 147
- EP-A1- 2 258 781
- WO-A1-03/057497
- DE-A1-102005 061 768
- JP-A- H05 289 319
- US-A1- 2006 216 503

## Beschreibung

Die Erfindung liegt auf dem technischen Gebiet der Klebebänder. Insbesondere betrifft die Erfindung Klebebänder mit einer bestimmten Topographie in der Oberfläche einer Klebeschicht und speziell deren Verwendung zum Verkleben von Druckplatten.

Klebebänder werden in vielfältiger Weise zum Verbinden von Substraten, aber beispielsweise auch als Abdeck- oder Isolierbänder eingesetzt. Eine wichtige Rolle bei Verklebungen mit Klebebändern spielt die Beschaffenheit der Kontaktfläche zwischen Klebstoff und Substrat. Diese kann durch verschiedene äußere Einflüsse beeinträchtigt werden, wobei diese Einflüsse in der Regel zu einer Verringerung der zur Verfügung stehenden Kontaktfläche führen, wodurch wiederum die Qualität der angestrebten Verklebung sinkt. Beispielsweise kann die Kontaktfläche durch Lufteinschlüsse zwischen Klebstoff und Substrat verringert werden. Dies äußert sich häufig in ungenauen und/oder wenig festen und wenig dauerhaften Verklebungen.

Ein exaktes Positionieren von zu verklebenden Substraten ist zum Beispiel in Flexodruckverfahren unerlässlich. Dabei handelt es sich um Rotationsdruckverfahren, bei denen flexible Druckplatten aus Fotopolymer oder Gummi benutzt werden, die ein Relief entsprechend der aufzudruckenden Information aufweisen. Diese Druckplatten oder Druckformen werden auf einem Druckzylinder befestigt. Dazu werden Klebebänder verwendet, die durch ihre Kompressibilitätseigenschaften die Druckqualität wesentlich beeinflussen.

Im Druckverfahren durchläuft die Druckplatte dann ein Farbreservoir, wobei das Relief die Druckfarbe aufnimmt. Anschließend transportiert der Druckzylinder die Druckplatte zu einer Transferstation, wo die Druckfarbe enthaltende Oberfläche mit dem zu bedruckenden Substrat in Kontakt kommt. Beim Ablösen der Druckplatte vom Substrat spaltet der Druckfarbenfilm und hinterlässt einen Abdruck entsprechend dem auf der Druckplattenoberfläche enthaltenen Relief. Der Farbtransfer setzt eine präzise Kontrolle des Anpressdrucks beim Aufsetzen der Druckplatte auf das Substrat voraus, der wesentlich die Auftragsdicke und Einheitlichkeit des Druckbildes bestimmt.

Typischerweise wird zum Befestigen der Druckplatte am Druckzylinder ein doppelseitiges Klebeband eingesetzt. Um eine hohe Druckqualität zu gewährleisten, muss die Druckplatte sehr sorgfältig am Druckzylinder angebracht und genau positioniert werden. Dabei kommt es häufig vor, dass die Position der Platte mehrfach nachjustiert werden muss. Während des Anbringens der Platte am Druckzylinder und während eines eventuellen Repositionierens kommt es häufig zum Einschluss von Luft an den Grenzflächen zwischen Druckplatte und Klebeband und/oder zwischen Klebeband und Träger beziehungsweise Druckzylinder. Derartige Luftblasen führen zu Veränderungen des Anpressdrucks beim Aufsetzen der Druckplatte auf das Substrat und stellen eine der häufigsten Fehlerquellen in flexografischen Druckverfahren dar.

Zwar ist es grundsätzlich möglich, die Lufteinschlüsse mit Spritzen oder Messern zu entfernen, jedoch können diese Werkzeuge auch Schäden an den Druckplatten verursachen. Daher wurde versucht, dem Einschluss von Luftblasen mit einer speziellen Ausgestaltung der Klebebänder zu begegnen. So wurden Klebebänder mit parallel streifenweisem oder korrugiertem Klebstoffmuster eingesetzt. Derartige Klebebänder haben sich allerdings als zu wenig zuverlässig hinsichtlich der erreichten Verklebungsqualität erwiesen. Obwohl sich damit Luft effizient aus den Grenzflächen heraus treiben ließ, war die Klebwirkung zwischen Träger und Druckplatte insbesondere bei hohen Durchsatzraten zu unzuverlässig. Auch Klebebändern mit unregelmäßigem Klebstoffrelief wurden ausprobiert, zeigten aber ebenfalls unzulängliche Klebefestigkeiten und wiesen überdies in Teilbereichen nach wie vor Lufteinschlüsse auf.

US 5,296,277 beschreibt ein Klebeband mit einer Anzahl von Erhebungen in der Klebeschicht, welche abgeflachte, klebende Spitzen aufweisen, deren Fläche weniger als 25 % der Gesamtfläche der Klebeschicht ausmachen.

US 5,362,516 beschreibt eine Strukturierung der Oberfläche einer Klebeschicht mit Hilfe zuvor aufgebrachter Kugeln, über die dann der Klebstoff verteilt wird. Einen ähnlichen Aufbau hat US 5,141,790 zum Gegenstand, wobei die Strukturierung über in die Klebeschicht eingebrachte Partikel erreicht wird, deren Spitzen im Wesentlichen frei von Klebstoff sind.

GB 1 511 060 beschreibt eine Klebeschicht mit mindestens einem längeren Grat oder einer längeren Aussparung, wobei mindestens eine dieser Strukturen den äußeren Rand der Klebeschicht durchbricht.

US 5,268,228 beschreibt ein doppelseitiges Klebeband mit ein- oder beidseitig in der Klebeschicht enthaltenen Fugen, die zum Ableiten der Luft beim Verkleben dienen sollen und so dimensioniert sind, dass sie nach dem Verkleben größtenteils verschwinden.

Auch WO 98/29516 A1 hat Klebeschichten mit eingeprägtem Relief zum Gegenstand und beschreibt ein Verfahren zur Kontrolle der Topografie einer klebenden Oberfläche, bei dem das Relief beziehungsweise die Topografie der Klebeschicht das Klebeverhalten kontrolliert.

WO 02/11985 A1 beschreibt Klebebänder zum Einsatz in Flexodruckverfahren, die ein regelmäßiges Muster permanenter Nuten aufweisen. Darüber hinaus beschreibt die Schrift flexographische Druckverfahren und weitere Komponenten eines Geräts für den Flexodruck.

Die bisher bekannten Maßnahmen zum Vermeiden von Lufteinschlüssen beim Verkleben von Druckplatten sehen ein Abführen der Luft nach außen vor. Dadurch stellt sich jedoch häufig das Problem von Kapillareffekten, die sogar ein Ansaugen von Luft bewirken können. Zudem gestaltet sich die Verteilung der Benetzungsfläche beziehungsweise der Klebkräfte bedingt durch die in der Klebeschicht vorhandenen Luftabführkanäle häufig nachteilig, was zu mangelhaften Verklebungen führen kann. Beispielsweise ist es möglich, dass Luft gar nicht nach außen abgeführt wird, sondern lediglich innerhalb der Klebeschicht in den nächsten Hohlraum verschoben wird. Dort kann es zu größeren Luftansammlungen kommen, welche die Genauigkeit der Verklebung beziehungsweise der Positionierung des Substrats herabsetzen. Darüber hinaus ist die tatsächlich erreichte Kontaktfläche zwischen Klebstoff und Substrat häufig stark abhängig vom ausgeübten Anpressdruck.

In die Klebeschichten eingebrachte kontinuierliche Rillen bzw. Kanäle, die ein Abfließen von Luft ermöglichen sollen, können durch die vorstehend beschriebenen Kapillareffekte auch ein Eindringen von Flüssigkeiten, beispielsweise von Druckertinte, zumindest in die Randbereiche der Verklebungen begünstigen. Durch derartige Effekte können die Verklebungen bis hin zur Substratablösung geschwächt werden.

Aufgabe der Erfindung ist es daher, ein Klebeband zur Verfügung zu stellen, mit dem die vorstehenden Probleme überwunden werden können. Insbesondere soll das Klebeband dem Verschieben von Luftblasen innerhalb des Klebebandes durch den anliegenden Anpressdruck entgegenwirken und weitgehend konstante Klebflächen und Klebkräfte unabhängig vom Anpressdruck ermöglichen. Darüber hinaus soll ein Eindringen von Luft und insbesondere auch von Flüssigkeiten in die Randbereiche der Verklebungen vermieden werden.

Der Lösung der Aufgabe liegt der Gedanke zugrunde, eingeschlossene Luft zu wesentlichen Anteilen oder sämtlich nicht nach außen abzuleiten, sondern sie in definierte Aussparungen innerhalb der Klebeschicht abzuleiten und dort zu halten. Ein erster Gegenstand der Erfindung ist daher die Verwendung eines Klebebandes, das mindestens eine Haftklebeschicht umfasst, wobei die Haftklebeschicht mindestens eine Rille aufweist, die nicht bis zu einem der Ränder der Haftklebeschicht reicht, und der Anteil am gesamten Rillenvolumen der Haftklebeschicht, welcher derartigen Rillen zuzuordnen ist, mehr als 50 % beträgt, zum Verkleben von Druckplatten. Bei einer derartigen Verwendung kommt der Vorteil der deutlich verringerten bzw. nicht mehr vorhandenen Kapillareffekte in den Randbereichen der Verklebung zum Tragen. Fluide und Luft werden daher gar nicht oder zumindest in verringertem Ausmaß in die Klebefläche gesogen. Eine Schwächung der Verklebung wird ebenso wie die Bildung neuer Luftblasen unter dem Einfluss eines nur an bestimmten Stellen des Klebebandes anliegenden Anpressdrucks verringert oder vollständig vermieden.

Erfindungsgemäß bevorzugt beträgt der Anteil am gesamten Rillenvolumen der Haftklebeschicht, welcher Rillen, die nicht bis zu einem der Ränder der Haftklebeschicht reichen, zuzuordnen ist, mehr als 70 %, stärker bevorzugt mehr als 80 %, insbesondere mehr als 90 %, beispielsweise mehr als 93 %, ganz besonders bevorzugt mehr als 96 % und am meisten bevorzugt mehr als 99 %.

Unter dem "gesamten Rillenvolumen der Haftklebeschicht" wird das in der Haftklebeschicht von Rillen eingenommene Gesamtvolumen verstanden. Dabei wird sowohl das von Rillen mit Randkontakt als auch das von Rillen ohne Randkontakt eingenommene Volumen berücksichtigt.

Unter Druckplatten, die allgemein auch als Druckformen bezeichnet werden können, werden erfindungsgemäß Gegenstände zum Übertragen von Druckfarben auf ein zur Aufnahme dieser Farben geeignetes Substrat verstanden. Die Druckplatten können grundsätzlich in allen in Frage kommenden Druckverfahren wie Hochdruck, Flachdruck, Tiefdruck und Durchdruck zum Einsatz kommen. Erfindungsgemäß bevorzugt handelt es sich bei den Druckplatten um Druckplatten für Hochdruckverfahren. Besonders bevorzugt sind die Druckplatten Flexodruckplatten. Im Flexodruck werden weiche Druckformen und dünnflüssige Druckfarben eingesetzt. Die Druckformen bestehen üblicherweise entweder aus einer UV-empfindlichen Fotopolymerplatte oder aus Gummi. Die fotopolymere Druckform wird durch eine Negativmaske mit UV-Licht belichtet, und die druckenden Elemente werden in einem Auswaschprozess entwickelt. Die Fertigung der Druckformen aus Gummimaterial erfolgt mittels Lasergravur. Die Druckplatten werden nach ihrer Herstellung unter Verwendung von Klebeändern auf den Druckzylinder der Flexodruckmaschine geklebt.

Unter einer "Haftklebeschicht" wird eine Schicht eines viskoelastischen Klebstoffs verstanden, dessen abgebundener Film bei Raumtemperatur in trockenem Zustand permanent klebrig und klebfähig bleibt. Die Haftklebeschicht kann - ggf. nach dem Entfernen eines aufliegenden Releaseliners - in direkten Kontakt mit einem Substrat treten und auf diesem anhaften. Die Klebung erfolgt durch leichten Anpressdruck sofort auf fast allen Substraten.

Bevorzugt enthält die mindestens eine Haftklebeschicht des Klebebandes der erfindungsgemäßen Verwendung ein Polymer ausgewählt aus der Gruppe bestehend aus Naturkautschuken, Synthesekautschuken, Polyacrylaten, Silikonen und Gemischen aus zwei oder mehreren der vorstehenden Polymere. Besonders bevorzugt enthält die mindestens eine Haftklebeschicht des erfindungsgemäßen Klebebandes zu mindestens 30 Gew.-%, stärker bevorzugt zu mindestens 40 Gew.-% und insbesondere zu mindestens 50 Gew.-%, bezogen auf das Gesamtgewicht der Haftklebeschicht, ein Polymer ausgewählt aus der Gruppe bestehend aus Naturkautschuken, Synthesekautschuken, Polyacrylaten, Silikonen und Gemischen aus zwei oder mehreren der vorstehenden Polymere.

Synthesekautschuke umfassen bevorzugt Styrol-Butadien-Copolymere, Blockcopolymere wie beispielsweise Styrol-Isopren-Styrol, Styrol-Butadien-Styrol, Styrol-Ethylen/Butylen-Styrol, Styrol-Ethylen/Propylen-Styrol, sowie Kombinationen der vorstehenden Copolymere. Synthese- wie auch Naturkautschuke werden üblicherweise zusammen mit mindestens einem klebkraftverstärkenden Harz eingesetzt. Als klebkraftverstärkende Harze kommen beispielsweise Polymerisate von ungesättigten C₅-C₉-Kohlenwasserstoffen, Terpenharze und Kolophonium in Frage.

Unter "Polyacrylaten" werden Polymere verstanden, deren stoffmengenbezogene Monomerbasis zu mindestens 30% aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 30% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Bevorzugt wird ein Polyacrylat eingesetzt, dass auf die folgende Monomerzusammensetzung zurückgeführt werden kann:
a) Acrylsäureester und/oder Methacrylsäureester der folgenden Formel

   CH₂ = C(R^{I})(COOR^{II})

   wobei R^{I} = H oder CH₃ und R^{II} ein Alkylrest mit 4 bis 14 C-Atomen ist,
b) olefinisch ungesättigte Monomere mit funktionellen Gruppen, die beispielsweise gegenüber Epoxidgruppen reaktiv sind,
c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) sind bevorzugt derart gewählt, dass das Polymerisationsprodukt insbesondere eine Glastemperatur ≤ 15 °C (DMA bei geringen Frequenzen) aufweist.

Es ist vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie zum Beispiel 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itaconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

### Beispielhafte Monomere der Komponente (c) sind:

Methylacrylat, Ethylacrylat, Propylacrylat, Methylmethacrylat, Ethylmethacrylat, Benzylacrylat, Benzylmethacrylat, *sec*-Butylacrylat, *tert*-Butylacrylat, Phenylacrylat, Phenylmethacrylat, Isobornylacrylat, Isobornylmethacrylat, *tert*-Butylphenylacrylat, *tert-*Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N-*(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N*,*N*-Dimethylmethacrylamid, *N-*Benzylacrylamide, *N*-Isopropylacrylamid, *N*-*tert*-Butylacrylamid, *N*-*tert*-Octylacrylamid, *N-*Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, *N*-*tert-*Butylacrylamid und Allylacrylat.

Die Herstellung der Polyacrylate kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Die gewichtsmittleren Molekulargewichte Mw der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes Mw und der Polydisperistät PD in dieser Schrift beziehen sich auf die Bestimmung per Gelpermeationschromatographie. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Silikone sind bevorzugt Polydiorganosiloxane mit einem zahlenmittleren Molekulargewicht von etwa 5.000 bis etwa 10.000.000, insbesondere von etwa 50.000 bis etwa 1.000.000 und/oder copolymere Silikonharze , die auch als MQ-Harze bezeichnet werden, mit einem zahlenmittleren Molekulargewicht von etwa 100 bis etwa 1.000.000, insbesondere von etwa 500 bis etwa 50.000. Die MQ-Harze enthalten Triorganosilyloxy-Einheiten sowie SiO_{4/2}-Einheiten. Silikon-basierende Haftklebstoffe enthalten üblicherweise 20 bis 60 Gewichtsteile Polydiorganosiloxane und 40 bis 80 Gewichtsteile eines oder mehrerer MQ-Harze(s). Üblicherweise wird eine Reaktion der Polydiorganosiloxane mit den MQ-Harzen angestrebt, um klebende Eigenschaften auszubilden. Eine solche Reaktion kann beispielsweise eine Kondensationsreaktion zwischen im MQ-Harz enthaltenen Silanol-Funktionalitäten und endständigen Silanol-Gruppen der Diorganopolysiloxane sein. Einen weiteren möglichen Reaktionsweg bilden Additionsreaktionen zwischen Alkenyl-Funktionalitäten der Polydiorganosiloxane und Si-H-, Alkenyl- und/oder Silanol-Funktionalitäten der MQ-Harze.

Die mindestens eine Haftklebeschicht des Klebebandes der erfindungsgemäßen Verwendung kann Additive enthalten, welche zur Ausprägung bestimmter Eigenschaften der Haftklebeschicht beitragen können. Bei diesen Additiven kann es sich beispielsweise um Pigmente, Weichmacher, Füllstoffe, Stabilisatoren, Antioxidantien etc. handeln. Der Anteil der Additive an der Haftklebeschicht beträgt bevorzugt von 0,1 bis 50 Gew.-%, bezogen auf das Gesamtgewicht der Haftklebeschicht.

Das Flächengewicht der nicht gerillten Bereiche der Haftklebeschicht beträgt bevorzugt maximal 200 g/m², stärker bevorzugt maximal 100 g/m² und insbesondere 40 bis 100 g/m², beispielsweise 60 bis 100 g/m². Das angegebene Flächengewicht bezieht sich auf die vollständig ausgeprägten Bereiche der Haftklebeschicht und somit nicht auf die erfindungsgemäß vorgesehenen Rillen.

Ebenfalls bevorzugt ist die Haftklebeschicht eine zusammenhängende Haftklebeschicht. Darunter wird eine Haftklebeschicht verstanden, die parallel zu ihrer nicht gerillten Oberfläche eine Ebene mit durchgehend vorhandener, das heißt an keiner Stelle durchbrochener, Haftklebeschicht aufweist. Eine zusammenhängende Klebeschicht weist selbstverständlich die erfindungsgemäß vorgesehene(n) Rille(n) auf, diese dürfen im Falle einer zusammenhängenden Haftklebeschicht jedoch nicht so tief sein, dass die Haftklebeschicht unterbrochen ist. Vorausgesetzt, dass die Oberfläche der Haftklebeschicht im wesentlichen in der x-y-Ebene liegt, muss demgemäß bei einer zusammenhängenden Haftklebeschicht ein Schnitt parallel zur x-y-Ebene in einer bestimmten Tiefe z dazu führen, dass an jedem Punkt in der Schnittebene Haftklebemasse vorliegt. Als nicht gerillte Oberfläche der Haftklebeschicht wird die nicht gerillte Grenzfläche zum umgebenden Medium auf der dem zu verklebenden Substrat zugewandten Seite der Haftklebeschicht angesehen.

Bei dem Klebeband der erfindungsgemäßen Verwendung kann es sich sowohl um ein einals auch um ein doppelseitiges Klebeband handeln.

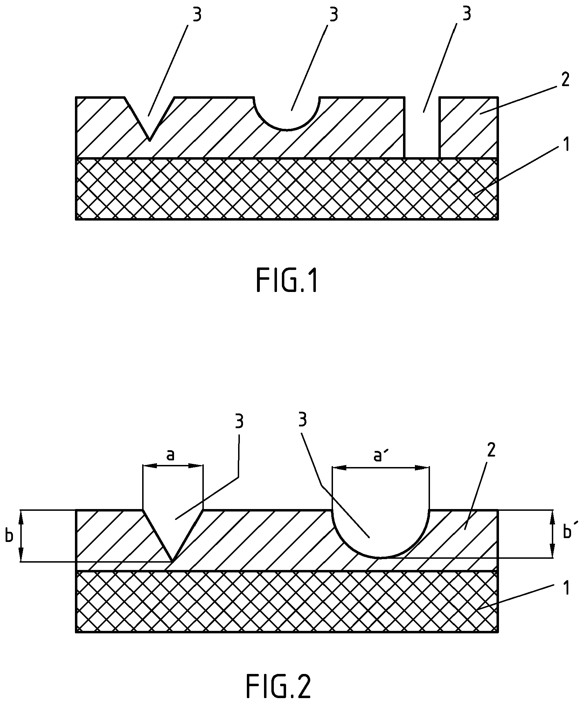

Unter einer "Rille" wird eine in der Oberfläche der Haftklebeschicht beginnende, makroskopisch wahrnehmbare Aussparung innerhalb der Haftklebeschicht verstanden, die grundsätzlich eine beliebige Form und Tiefe haben kann. Figur 1 illustriert anhand der Darstellung eines in Richtung der Schichtenabfolge in einem Winkel von 90° zur Laufrichtung der Rillen erfolgten Schnittes durch ein erfindungsgemäßes Klebeband einige Varianten von Rillen in der Haftklebeschicht. Darin bedeuten:
1 - Träger
2 - Haftklebeschicht
3 - Rillen.

Erfindungsgemäß bevorzugt beträgt die Rillentiefe der Rille bzw. der Rillen, die nicht bis zu einem der Ränder der Haftklebeschicht reichen, 10 bis 200 µm, stärker bevorzugt 10 bis 100 µm, insbesondere 20 bis 60 µm, beispielsweise 25 bis 50 µm, ganz besonders bevorzugt 25 bis 30 µm. Unter der "Rillentiefe" wird die maximale Ausdehnung einer Rille senkrecht zu der Ebene verstanden, in der die nicht gerillte Oberfläche der Haftklebeschicht liegt. Die nicht gerillte Oberfläche der Haftklebeschicht befindet sich an der dem Substrat zugewandten Seite der Haftklebeschicht.
Darüber hinaus variiert die Rillentiefe aller Rillen, die nicht bis zu einem der Ränder der Haftklebeschicht reichen, vorzugsweise um nicht mehr als 20%. Die auf diese Weise erreichte gleichmäßige Topographie gewährleistet gleichbleibende Klebeeigenschaften über die volle Ausdehnung des Klebebandes hinweg.

Erfindungsgemäß bevorzugt beträgt die Rillenbreite der Rille bzw. der Rillen, die nicht bis zu einem der Ränder der Haftklebeschicht reichen, 10 bis 200 µm. Unter der "Rillenbreite" wird die maximale Entfernung der Rillenränder voneinander in einem Winkel von 90° zur Laufrichtung der Rille an einer beliebigen Stelle der Rille verstanden.

Figur 2 verdeutlicht die Bedeutung der Begriffe "Rillentiefe" und "Rillenbreite" anhand der Darstellung eines parallel zur Schichtenabfolge und in einem Winkel von 90° zur Laufrichtung der Rillen erfolgten Schnittes durch ein erfindungsgemäßes Klebeband. Darin bedeuten:
1 - Träger
2 - Haftklebeschicht
3 - Rillen
a, a' - Rillenbreite
b, b' - Rillentiefe.

Erfindungsgemäß weist die Haftklebeschicht mindestens eine Rille auf, die nicht bis zu einem der Ränder der Haftklebeschicht reicht. Darunter wird verstanden, dass die betreffende Rille keinen Kontakt mit einer äußeren Begrenzung der Oberfläche der Haftklebeschicht oder irgendeiner unterhalb der Oberfläche und parallel zur Ebene der Oberfläche liegenden Fläche der Haftklebeschicht hat. Vielmehr befindet sich zwischen einer solchen Rille und dem Rand der Haftklebeschicht immer zumindest eine minimale Menge Haftklebemasse.

Eine Rille reicht dann bis zu einem der Ränder der Haftklebeschicht, wenn ein Fluid aus einem inneren Bereich der Rille auf einem ununterbrochenen Weg einen Rand der Haftklebeschicht erreichen und dort aus ihr heraustreten kann. Das bedeutet, dass auch eine Rille, die nur bis zu einem anderen Rillenarm reicht und in diesen einmündet, als Rille angesehen wird, die bis zu einem der Ränder der Haftklebeschicht reicht, sofern ein Fluid ausgehend von der ersten, in den anderen Rillenarm einmündenden Rille einen Rand der Haftklebeschicht erreichen und dort aus der Haftklebeschicht heraustreten kann.

Die Ausgestaltung der Rillenstruktur des Klebebandes der erfindungsgemäßen Verwendung unterscheidet sich somit von herkömmlichen Topographien, die häufig durchgehende, mit den Rändern in Kontakt stehende Kanäle zum Abtransport von Luft vorsehen. Bei Klebebändern zum Verkleben von Druckplatten, insbesondere von Druckplatten für den Flexodruck, sind solche zum Abführen von Luft nach außen geeigneten Kanäle in der Klebeschicht Standard, weil davon ausgegangen wird, dass Luft aus der Verklebungsgrenzfläche entfernt werden muss, um zuverlässig ein gleichmäßiges Druckbild zu erhalten. Mit dem Klebeband der erfindungsgemäßen Verwendung lassen sich die bereits aufgeführten Nachteile derartiger Ausgestaltungen vermeiden, ohne dass Lufteinschlüsse die Verklebungsqualität beeinflussen. Bevorzugt beträgt der Abstand zwischen einem beliebigen Punkt auf dem Rand der Haftklebeschicht und einem beliebigen Punkt einer Rille, die nicht bis zu einem der Ränder der Haftklebeschicht reicht, mindestens 1 mm.

Das vom Klebeband der erfindungsgemäßen Verwendung eingeschlossene Luftvolumen und die erreichbare Substratbenetzungsfläche stehen bevorzugt in einem solchen Verhältnis zueinander, dass auftretende Druck- und Schubspannungen im Montageprozess und während der Anwendung des Klebebandes die Luft nicht verschieben können. Bevorzugt beträgt die nicht gerillte Oberfläche der Haftklebeschicht 50 bis 99 %, insbesondere 70 bis 95 % und ganz besonders bevorzugt 75 bis 90 % der Gesamtoberfläche der Haftklebeschicht.

Bevorzugt sind die Rillen des Klebebandes der erfindungsgemäßen Verwendung permanente Rillen. Darunter wird verstanden, dass die rheologischen Eigenschaften der Haftklebeschicht so eingestellt sind, dass die durch die Rille(n) bestimmte Topographie der Klebeschicht in ihrer wesentlichen Ausprägung während der beabsichtigten Nutzung des Klebebandes nachhaltig erhalten bleibt. Besonders bevorzugt bedeutet "permanente Rille", dass die Topographie auch nach mehrfacher Benutzung des Klebebandes oder nach Benutzung über längere Zeit, zum Beispiel über mehrere Stunden bei 20 bis 80 °C, in ihrer wesentlichen Ausprägung erhalten bleibt. Diese Permanenz der Rille(n) gewährleistet, dass auch bei mehrfacher oder länger dauernder Beanspruchung des Klebebandes eine Aufnahme von Luft in den dafür vorgesehenen Aussparungen erfolgen kann und somit exakte Verklebungen möglich sind.

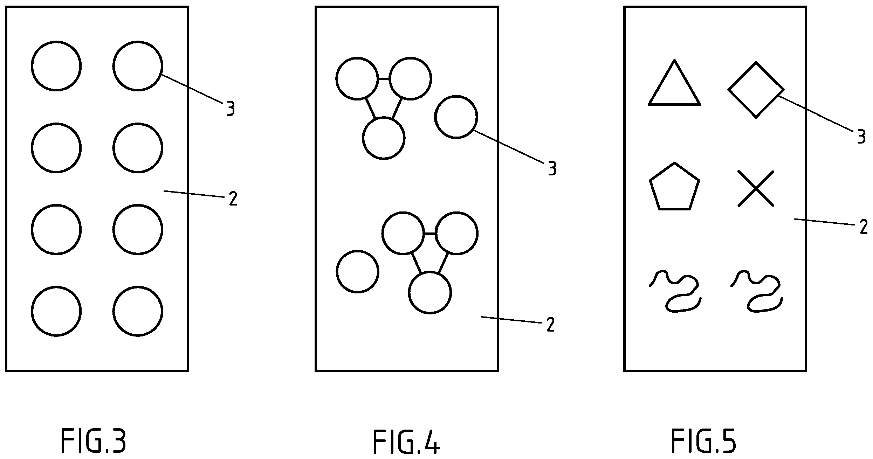

Die geometrische Form des Verlaufs der Rillen, die nicht bis zu einem der Ränder der Haftklebeschicht reichen, ist grundsätzlich frei wählbar und kann beispielsweise Linien, Kreise, Vielecke und/oder formlose Gebilde umfassen. Auch Schriftzüge, Logos oder ähnliches sind möglich. Sich wiederholende Muster können untereinander verbunden sein oder separat voneinander vorliegen. Die Figuren 3 bis 5 zeigen jeweils eine Draufsicht auf die gerillte Haftklebeschicht eines erfindungsgemäßen Klebebandes und verdeutlichen mögliche Rillenformen. Figur 3 zeigt sich wiederholende, voneinander separat vorliegende Formen. Figur 4 zeigt sich wiederholende, teilweise separat voneinander und teilweise miteinander verbundene Rillenformen. Figur 5 zeigt verschiedene, separat voneinander vorliegende Rillenformen. Es bedeuten jeweils:
2 - Haftklebeschicht
3 - Rillen.

Die Rillen können darüber hinaus in einem Schnitt in Richtung der Schichtenabfolge des Klebebandes und im Winkel von 90° zur Laufrichtung der jeweiligen Rille ebenfalls grundsätzlich eine beliebige Form aufweisen, die beispielsweise dreieckige, rechteckige oder halbkreisförmige Varianten umfasst. Einige dieser Formen gehen bereits aus Figur 1 hervor.

Bevorzugt sind die höher liegenden Bereiche der Haftklebeschicht makroskopisch eben. Dies bedeutet insbesondere, dass sich ein scharfer Übergang zu einer Rille ausmachen lässt, der durch die Angabe eines Winkels zwischen ebenem, ungerillten Bereich der Haftklebeschicht und Rillenwand spezifiziert werden kann. Das Gegenstück zu makroskopisch ebenen höher liegenden Bereichen der Haftklebeschicht sind annähernd wellenförmige höher liegende Bereiche. Mit einer gerillten Haftklebeschicht, deren höher liegende Bereiche eben gestaltet sind, lässt sich vorteilhaft eine vom Anpressdruck weitgehend unabhängige Verklebungsfläche erzielen, während die Verklebungsfläche bei eher wellenförmigen Strukturen deutlich stärker vom Anpressdruck abhängt.

Ein weiterer Gegenstand der Erfindung ist ein doppelseitiges Klebeband, das an seiner Ober- und Unterseite je eine Haftklebeschicht umfasst und ferner eine Polymerfolie und/oder einen Polymerschaum umfasst und das dadurch gekennzeichnet ist, dass mindestens eine der Haftklebeschichten mindestens eine Rille aufweist, die nicht bis zu einem der Ränder der Haftklebeschicht reicht und dass der Anteil am gesamten Rillenvolumen der Haftklebeschicht, welcher derartigen Rillen zuzuordnen ist, mehr als 50 % beträgt. Die Polymerfolie ist bevorzugt eine Stabilisierungsfolie, beispielsweise eine PET-Folie. Besonders bevorzugt umfasst das erfindungsgemäße Klebeband einen Polymerschaum, und der Polymerschaum ist ein Polyolefinschaum, ganz besonders bevorzugt ein geschlossenzelliger Polyethylenschaum.

Die Stabilisierungsfolie erhöht vorteilhaft die Zugresistenz des erfindungsgemäßen Klebebandes und vereinfacht somit dessen Demontage. Die Schaumschicht erhöht die Druckqualität. Zur Fixierung der Stabilisierungsfolie auf dem Schaum kann dazwischen eine Kaschierklebemasse eingebracht sein.

Das erfindungsgemäße Klebeband enthält beispielsweise die folgenden Schichten in der angegebenen Abfolge:
- gerillte Haftklebemasse
- Polymerfolie (Stabilisierungsfolie)
- Kaschierklebemasse
- Polymerschaum
- Haftklebemasse (gerillt oder nicht gerillt).

Möglich ist auch ein vorstehender Aufbau, bei dem keine Kaschierklebemasse enthalten ist, bei dem die Stabilisierungsfolie aber beidseitig mit einer Polyethylenschicht umgeben ist, die beispielsweise als flüssige Masse auf die Stabilisierungsfolie aufgetragen wurde.

Ein weiterer Gegenstand der Erfindung ist ein Releaseliner, der eine Polyolefinfolie oder einen Papierträger und weiter eine Silikon-Trennschicht umfasst und der dadurch gekennzeichnet ist, dass die Silikon-Trennschicht mindestens einen Grat aufweist, der nicht bis zu einem der Ränder der Silikon-Trennschicht reicht und der Anteil am gesamten Gratvolumen der Silikon-Trennschicht, welcher derartigen Graten zuzuordnen ist, mehr als 50 % beträgt. Mit einem derartigen Releaseliner lässt sich die von den Graten bestimmte Struktur auf einfache Weise in die Haftklebeschicht eines Klebebandes einprägen und somit dort das oben beschriebene Rillenmuster erzeugen. Besonders bevorzugt umfasst der erfindungsgemäße Releaseliner eine Polyolefinfolie, und die Polyolefinfolie ist eine Polypropylenfolie. Insbesondere basiert die Polyolefinfolie auf monoaxial oder biaxial orientiertem Polypropylen.

Im Rahmen der erfindungsgemäßen Verwendung wurden die Rillen der Haftklebeschicht bevorzugt durch Einprägen mittels eines Releaseliners mit einer komplementären Oberflächenstruktur erhalten.

Unter einem Releaseliner- im Folgenden auch einfach als Liner bezeichnet-wird ein eine antihaftende (abhäsive) Oberfläche aufweisendes Abdeckmaterial verstanden, das zum temporären Schutz einer Klebemasse direkt auf die Masse aufgebracht wird und in der Regel unmittelbar vor Applikation der Klebemasse durch einfaches Abziehen entfernt werden kann. Ein Releaseliner sorgt unter anderem dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgt der Releaseliner zusätzlich dafür, dass beim Abrollen die richtige Seite der Klebemasse zuerst freigelegt wird.

Ein Liner ist nicht Bestandteil eines Klebebandes, sondern nur ein Hilfsmittel zu dessen Herstellung, Lagerung oder für die Weiterverarbeitung. Darüber hinaus ist ein Liner im Gegensatz zu einem Klebebandträger nicht fest mit einer Klebstoffschicht verbunden, sondern der Verbund ist nur temporär und nicht dauerhaft.

Unter einem "Grat" wird eine in der Oberfläche des Liners beginnende, makroskopisch wahrnehmbare Erhöhung verstanden, die grundsätzlich eine innerhalb des Kontexts der Erfindung liegende beliebige Form und Höhe haben kann. Bezüglich möglicher Formen und Anordnungsmuster der Grate des Liners gilt das oben zu den Rillen beziehungsweise dem Rillenmuster der Haftklebeschicht Gesagte entsprechend. Die geometrische Form des Verlaufs der Grate ist somit grundsätzlich ebenfalls frei wählbar und kann beispielsweise Linien, Kreise, Vielecke und/oder formlose Gebilde umfassen. Auch Schriftzüge, Logos oder ähnliches sind möglich. Sich wiederholende Muster können untereinander verbunden sein oder separat voneinander vorliegen. Im Querschnitt umfassen die Grate beispielsweise dreieckige, rechteckige oder halbkreisförmige Varianten.

Unter einer "Oberfläche" des Liners wird die jeweilige Grenzfläche der beiden Seiten des Liners zum umgebenden Medium angesehen. Erfindungsgemäß bevorzugt beträgt der Anteil der von Graten gebildeten Oberfläche der Silikon-Trennschicht 1 bis 50 %, stärker bevorzugt 5 bis 30 % und insbesondere 10 bis 25 %.

Erfindungsgemäß weist die Silikon-Trennschicht mindestens einen Grat auf, der nicht bis zu einem der Ränder der Silikon-Trennschicht reicht. Darunter wird in einem zum Rillenmuster des Klebebandes der erfindungsgemäßen Verwendung korrespondierenden Sinne verstanden, dass der betreffende Grat keinen Kontakt mit einer äußeren Begrenzung der Oberfläche der Silikon-Trennschicht hat.

Die Grathöhe des erfindungsgemäßen Releaseliners beträgt bevorzugt 10 bis 200 µm, stärker bevorzugt 20 bis 100 µm, insbesondere 25 bis 60 µm, beispielsweise 30 bis 50 µm. Unter der "Grathöhe" wird die maximale Ausdehnung eines Grates senkrecht zu der Ebene verstanden, in der die nicht mit Graten besetzte Oberfläche der Silikon-Trennschicht liegt.

Die Gratbreite am Fuß des Grates beträgt bevorzugt 10 bis 200 µm. Unter der "Gratbreite" wird die maximale Entfernung zweier Punkte am Fuß des Grates voneinander in einem Winkel von 90° zur Laufrichtung des Grates an einer beliebigen Stelle des Grates verstanden.

Die Messung der Ausdehnung der Grate des erfindungsgemäßen Liners und der Rillen des Klebebandes der erfindungsgemäßen Verwendung, insbesondere die Messung der Grathöhen und der Rillentiefen, erfolgt mittels Rasterelektronenmikroskopie (REM).

Der erfindungsgemäße Liner kann auf einer Seite oder auch auf beiden Seiten jeweils mindestens einen Grat enthalten.

Die Silikon-Trennschicht des erfindungsgemäßen Liners enthält bevorzugt ein vernetztes Silikonsystem. Dazu zählen Silikonsysteme, die aus Mischungen aus Vernetzungskatalysatoren und so genannten thermisch härtbaren kondensations- oder additionsvernetzenden Organopolysiloxanen hergestellt wurden. Für kondensationsvernetzende Silikonsysteme sind als Vernetzungskatalysatoren häufig Zinnverbindungen wie Dibutylzinndiacetat in der Masse zugegen.

Die Dicke des erfindungsgemäßen Liners ohne Berücksichtigung der Grate beträgt bevorzugt 20 bis 200 µm.

Die Grattopographie auf der Oberfläche des erfindungsgemäßen Liners kann beispielsweise durch Umformung (Prägeverfahren), Urformung (Cast-Folie) oder durch Bedruckung erhalten werden.

Ein weiterer Gegenstand der Erfindung ist ein Verbund, der einen erfindungsgemäßen Releaseliner und ein erfindungsgemäßes doppelseitiges Klebeband umfasst und der dadurch gekennzeichnet ist, dass die mindestens einen Grat aufweisende Silikon-Trennschicht des Releaseliners mit der mindestens eine Rille aufweisenden Haftklebeschicht des Klebebandes in unmittelbarem Kontakt steht und dass die Haftklebeschicht eine Topographie aufweist, die im Wesentlichen die Umkehrung der Topographie der mindestens einen Grat aufweisenden Oberfläche der Silikon-Trennschicht des Releaseliners ist.

### Beispiele

Es wurden Klebebänder mit folgendem Aufbau verwendet:
60 µm Polyacrylathaftklebmasse
460 µm geschlossenzelliger Polyethylenschaum
20 µm Kaschierklebstoff
12 µm PET-Folie
35 µm Haftklebeschicht

In die 35 µm - Haftklebeschicht dieser Klebebänder wurden mit Hilfe eines entsprechend strukturierten Liners (2 µm Silikonbeschichtung beidseitig auf 110 µm Polypropylenfolie) die nachfolgend aufgeführten Strukturen eingeprägt.
Beispiel 1: Kreise mit einem Innendurchmesser von 2 mm und einem Außendurchmesser von 2,2 mm; Rillenbreite folglich 100 µm; annähernd rechteckiger Rillenquerschnitt; Rillentiefe 25 µm; Abstand zwischen den Kreisen 1 mm; minimaler Abstand zum Rand der Haftklebeschicht 2 mm;
Beispiel 2: unregelmäßig angeordnete Strukturen mit wellenförmigem Querschnitt (insbesondere der höher liegenden Bereiche der Haftklebeschicht) und einer Tiefe von 25 µm;
Beispiel 3 (Vergleichsbeispiel): kommerziell erhältliches Tape mit durchgehenden Kanälen (3M 1320E).

### Durchgeführte Untersuchungen

### 1. Luftdurchlässigkeit

Bei diesem Test wird die Luftdurchlässigkeit (Air Bleed) zwischen Haftgrund und Klebmasseoberfläche gemessen. Das Klebeband wird dabei mit 7 kg Andruckgewicht auf eine Prüfplatte aufgebracht. Anschließend wird ein Luftdruck von 0,3 bar für 10 s angelegt. Nach Ablauf dieser Zeit wird die Luftmenge in Normliter (qn/h) gemessen, die zwischen Klebmasse und Prüfplatte auf einer definierten Strecke ausgeflossen ist. Pro Klebmasse werden drei Einzelprüfungen durchgeführt und daraus der Mittelwert gebildet.

**Tabelle 1: Ergebnisse**

| Beispiel Nr. | Normliter (qn/h) |
|---|---|
| 1 | 0 |
| 2 | 0 |
| 3 (Vergleichsbeispiel) | 9 |

### 2. Verklebungsfläche

Auf ein silikonisiertes Papier wird eine Tonerschicht aufgedruckt, auf welche das zu vermessende Klebeband mit der strukturierten Klebmasse aufgelegt wird. Das Klebeband wird mit dem in Tabelle 2 angegebenen Gewicht angedrückt. Anschließend wird das Klebeband von dem mit der Tonerschicht versehenen silikonisierten Papier abgezogen. Der Abdruck wird in Graustufen gescannt, und das Graustufenbild wird mittels einer Bildbearbeitungssoftware in eine 1 Bit-Datei umgewandelt. Die Bit-Datei wir in Graustufen zurückumgewandelt, und die prozentualen Schwarz- bzw. Weißanteile werden mittels einer geeigneten Software vermessen.

**Tabelle 2: Ergebnisse**

| Beispiel Nr. | Andruckgewicht (kg) | Verklebungsfläche (%) |
|---|---|---|
| 1 | 1 | 96 |
| 1 | 2 | 95 |
| 1 | 4 | 98 |
| 2 | 1 | 82 |
| 2 | 2 | 92 |
| 2 | 4 | 99 |

Die Ergebnisse zeigen, dass bei scharf begrenzten Rillenstrukturen (annähernd rechtwinkliger Rillenquerschnitt in Beispiel 1) im Vergleich zu Strukturen mit wellenförmigem Querschnitt (Beispiel 2) eine vom Andruckgewicht weitgehend unabhängige, konstante Verklebungsfläche erzielt wird.

## Patentansprüche

1. Verwendung eines Klebebandes umfassend mindestens eine Haftklebeschicht, wobei die Haftklebeschicht mindestens eine Rille aufweist, die nicht bis zu einem der Ränder der Haftklebeschicht reicht, und
der mittels Rasterelektronenmikroskopie bestimmte Anteil am gesamten Rillenvolumen der Haftklebeschicht, welcher derartigen Rillen zuzuordnen ist, mehr als 50 % beträgt,
zum Verkleben von Druckplatten.

2. Verwendung gemäß Anspruch 1, **dadurch gekennzeichnet, dass** der Anteil am gesamten Rillenvolumen der Haftklebeschicht, welcher derartigen Rillen zuzuordnen ist, mehr als 70 % beträgt.

3. Verwendung gemäß mindestens einem der vorstehenden Ansprüche, **dadurch gekennzeichnet, dass** die Druckplatten Flexodruckplatten sind.

4. Verwendung gemäß mindestens einem der vorstehenden Ansprüche, **dadurch gekennzeichnet, dass** die nicht gerillte Oberfläche der Haftklebeschicht 50 bis 99 % der Gesamtoberfläche der Haftklebeschicht beträgt.

5. Verwendung gemäß mindestens einem der vorstehenden Ansprüche, **dadurch gekennzeichnet, dass** die Rillentiefe der Rillen, die nicht bis zu einem der Ränder der Haftklebeschicht reichen, 10 bis 100 µm beträgt.

6. Verwendung gemäß mindestens einem der vorstehenden Ansprüche, **dadurch gekennzeichnet, dass** die Rillenbreite der Rillen, die nicht bis zu einem der Ränder der Haftklebeschicht reichen, 10 bis 200 µm beträgt.

7. Verwendung gemäß mindestens einem der vorstehenden Ansprüche, **dadurch gekennzeichnet, dass** die Rillen permanente Rillen sind.

8. Verwendung gemäß mindestens einem der vorstehenden Ansprüche, **dadurch gekennzeichnet, dass** die Rillen der Haftklebeschicht durch Einprägen mittels eines Releaseliners mit einer komplementären Oberflächenstruktur erhalten wurden.

9. Doppelseitiges Klebeband, umfassend an seiner Ober- und Unterseite je eine Haftklebeschicht und ferner umfassend eine Polymerfolie und/oder einen Polymerschaum, **dadurch gekennzeichnet, dass** mindestens eine der Haftklebeschichten mindestens eine Rille aufweist, die nicht bis zu einem der Ränder der Haftklebeschicht reicht, und
der mittels Rasterelektronenmikroskopie bestimmte Anteil am gesamten Rillenvolumen der Haftklebeschicht, welcher derartigen Rillen zuzuordnen ist, mehr als 50 % beträgt.

10. Doppelseitiges Klebeband gemäß Anspruch 9, **dadurch gekennzeichnet, dass** das Klebeband einen Polymerschaum umfasst und der Polymerschaum ein Polyolefinschaum ist.

11. Releaseliner, umfassend eine Polyolefinfolie oder einen Papierträger und ferner umfassend eine Silikon-Trennschicht, **dadurch gekennzeichnet, dass** die Silikon-Trennschicht mindestens einen Grat aufweist, der nicht bis zu einem der seitlichen Ränder der Silikon-Trennschicht reicht, und
der mittels Rasterelektronenmikroskopie bestimmte Anteil am gesamten Gratvolumen der Silikon-Trennschicht, welcher derartigen Graten zuzuordnen ist, mehr als 50 % beträgt.

12. Releaseliner gemäß Anspruch 11, **dadurch gekennzeichnet, dass** der Releaseliner eine Polyolefinfolie umfasst und die Polyolefinfolie eine Polypropylenfolie ist.

13. Verbund umfassend einen Releaseliner gemäß mindestens einem der Ansprüche 11 und 12 und ein doppelseitiges Klebeband gemäß mindestens einem der Ansprüche 9 und 10, **dadurch gekennzeichnet, dass** die mindestens einen Grat aufweisende Silikon-Trennschicht des Releaseliners mit der mindestens eine Rille aufweisenden Haftklebeschicht des Klebebands in unmittelbarem Kontakt steht und die Haftklebeschicht eine Topographie aufweist, die im Wesentlichen die Umkehrung der Topographie der mindestens einen Grat aufweisenden Oberfläche der Silikon-Trennschicht des Releaseliners ist.

## Claims

1. Use of an adhesive tape comprising at least one pressure-sensitively adhesive layer, the adhesive layer having at least one groove that does not extend to one of the edges of the adhesive layer, and
the proportion, determined by means of scanning electron microscopy, of the total groove volume of the adhesive layer that is accounted for by such grooves being more than 50%,
for the adhesive bonding of printing plates.

2. Use according to Claim 1, **characterized in that** the proportion of the total groove volume of the adhesive layer that is accounted for by such grooves is more than 70%.

3. Use according to at least one of the preceding claims, **characterized in that** the printing plates are flexographic printing plates.

4. Use according to at least one of the preceding claims, **characterized in that** the nongrooved surface area of the adhesive layer is 50% to 99% of the total surface area of the adhesive layer.

5. Use according to at least one of the preceding claims, **characterized in that** the depth of the grooves that do not extend to one of the edges of the adhesive layer is 10 to 100 µm.

6. Use according to at least one of the preceding claims, **characterized in that** the width of the grooves that do not extend to one of the edges of the adhesive layer is 10 to 200 µm.

7. Use according to at least one of the preceding claims, **characterized in that** the grooves are permanent grooves.

8. Use according to at least one of the preceding claims, **characterized in that** the grooves of the adhesive layer have been obtained by embossing using a release liner having a complementary surface structure.

9. Double-sided adhesive tape, comprising a pressure-sensitively adhesive layer on each of its top and bottom sides and further comprising a polymer film and/or a polymer foam, **characterized in that** at least one of the adhesive layers has at least one groove that does not extend to one of the edges of the adhesive layer, and
the proportion, determined by means of scanning electron microscopy, of the total groove volume of the adhesive layer that is accounted for by such grooves is more than 50%.

10. Double-sided adhesive tape according to Claim 9, **characterized in that** the adhesive tape comprises a polymer foam and the polymer foam is a polyolefin foam.

11. Release liner comprising a polyolefin film or a paper carrier and further comprising a silicone release layer, **characterized in that** the silicone release layer has at least one ridge that does not extend to one of the lateral edges of the silicone release layer, and
the proportion, determined by means of scanning electron microscopy, of the total ridge volume of the silicone release layer that is accounted for by such ridges is more than 50%.

12. Release liner according to Claim 11, **characterized in that** the release liner comprises a polyolefin film and the polyolefin film is a polypropylene film.

13. Assembly comprising a release liner according to at least one of Claims 11 and 12 and a double-sided adhesive tape according to at least one of Claims 9 and 10, **characterized in that** the silicone release layer with at least one ridge of the release liner is in direct contact with the pressure-sensitively adhesive layer having at least one groove of the adhesive tape, and the pressure-sensitively adhesive layer has a topography which is essentially the inverse of the topography of the surface having at least one ridge of the silicone release layer of the release liner.

## Revendications

1. Utilisation d'une bande adhésive comprenant au moins une couche adhésive de contact, la couche adhésive de contact comprenant au moins une rainure qui n'atteint pas un des bords de la couche adhésive de contact, et la proportion du volume de rainure total de la couche adhésive de contact qui correspond à de telles rainures, déterminée par microscopie électronique à balayage, étant supérieure à 50 %,
pour le collage de plaques d'impression.

2. Utilisation selon la revendication 1, **caractérisée en ce que** la proportion du volume de rainure total de la couche adhésive de contact qui correspond à de telles rainures est supérieure à 70 %.

3. Utilisation selon au moins l'une quelconque des revendications précédentes, **caractérisée en ce que** les plaques d'impression sont des plaques de flexographie.

4. Utilisation selon au moins l'une quelconque des revendications précédentes, **caractérisée en ce que** la surface non rainurée de la couche adhésive de contact est de 50 à 99 % de la surface totale de la couche adhésive de contact.

5. Utilisation selon au moins l'une quelconque des revendications précédentes, **caractérisée en ce que** la profondeur de rainure des rainures qui n'atteignent pas un des bords de la couche adhésive de contact est de 10 à 100 µm.

6. Utilisation selon au moins l'une quelconque des revendications précédentes, **caractérisée en ce que** la largeur de rainure des rainures qui n'atteignent pas un des bords de la couche adhésive de contact est de 10 à 200 µm.

7. Utilisation selon au moins l'une quelconque des revendications précédentes, **caractérisée en ce que** les rainures sont des rainures permanentes.

8. Utilisation selon au moins l'une quelconque des revendications précédentes, **caractérisée en ce que** les rainures de la couche adhésive de contact ont été obtenues par gravure au moyen d'un revêtement antiadhésif ayant une structure de surface complémentaire.

9. Bande adhésive double face, comprenant sur son côté supérieur et sur son côté inférieur une couche adhésive de contact et comprenant en outre un film polymère et/ou une mousse polymère, **caractérisée en ce qu'**au moins une des couches adhésives de contact comprend au moins une rainure qui n'atteint pas un des bords de la couche adhésive de contact, et la proportion du volume de rainure total de la couche adhésive de contact qui correspond à de telles rainures, déterminée par microscopie électronique à balayage, est supérieure à 50 %.

10. Bande adhésive double face selon la revendication 9, **caractérisée en ce que** la bande adhésive comprend une mousse polymère et la mousse polymère est une mousse de polyoléfine.

11. Revêtement antiadhésif, comprenant un film polymère ou un support en papier et comprenant en outre une couche de séparation en silicone, **caractérisé en ce que** la couche de séparation en silicone comprend au moins une crête qui n'atteint pas un des bords latéraux de la couche de séparation en silicone, et la proportion du volume de crête total de la couche de séparation en silicone qui correspond à de telles crêtes, déterminée par microscopie électronique à balayage, est supérieure à 50 %.

12. Revêtement antiadhésif selon la revendication 11, **caractérisé en ce que** le revêtement antiadhésif comprend un film de polyoléfine et le film de polyoléfine est un film de polypropylène.

13. Composite comprenant un revêtement antiadhésif selon au moins l'une quelconque des revendications 11 et 12 et une bande adhésive double face selon au moins l'une quelconque des revendications 9 et 10, **caractérisé en ce que** la couche de séparation en silicone comprenant au moins une crête du revêtement antiadhésif est en contact direct avec la couche adhésive de contact comprenant au moins une rainure de la bande adhésive, et la couche adhésive de contact présente une topographie qui est essentiellement l'inverse de la topographie de la surface comprenant au moins une crête de la couche de séparation en silicone du revêtement antiadhésif.
